# EUROPÄISCHE PATENTANMELDUNG

(11) **EP 0 805 541 A1**
(43) Veröffentlichungstag der Anmeldung: **05.11.1997**
(21) Anmeldenummer: 97810209.3
(22) Anmeldetag: 10.04.1997
(51) Int. Cl.: H02K 3/24, H02K 9/00

(54) **Gasgekühlter Wickelkopf für elektrische Maschine**

(30) Priorität: 02.05.1996 DE 19617540
(71) Anmelder: ASEA BROWN BOVERI AG, 5400 Baden (CH)
(72) Erfinder: Hirsch, Christoph, Dr., 5200 Windisch (CH); Hutter, Wilfied, 8952 Schlieren (CH); Von Wolfersdorf, Jens, Dr., 5417 Untersiggenthal (CH)
(74) Vertreter: Weibel, Beat

(57) **Zusammenfassung**

Bei der gasgekühlten elektrische Maschine werden die Leiterstäbe (3,4) im Wickelkopf durch einen Teilstrom des Kühlgasstroms, der durch innerhalb der Hauptisolierung (7) der Wicklungsstäbe gelegene Kühlkanäle (8,9) geführt ist, direkt gekühlt. Zu diesem Zweck weist jeder Stab mindestens ein an seiner einen Breitseite angeordnetes Paar von Kühlkanälen auf. Diese Kühlkanäle verlaufen bis zum Aktivteil des Statorblechkörpers (2) getrennt und sind erst dort untereinander verbunden. Die einen Kühlkanäle (9) sind mit einem vom Wickelkopfraum (30) durch eine Trennwand (33) getrennten Raum (32) mittels Isolierrohren (31) oder Isolierschläuchen verbunden. Die zweiten Kühlkanäle (9) stehen an den Ösen (5) mit dem Wickelkopfraum (5) in Verbindung.

Die Erfindung ermöglicht eine optimale, weil direkte Kühlung der Wicklungsstäbe im Wickelkopf.

## Beschreibung

### TECHNISCHES GEBIET

Die Erfindung bezieht sich auf eine gasgekühlte elektrische Maschine mit einer in Nuten des Statorblechkörpers angeordneten Statorwicklung, im wesentlichen bestehend aus jeweils zwei in einer Nut übereinanderliegenden, aus gegeneinander isolierten Teilleitern aufgebauten Statorwicklungsstäben, die ausserhalb des Statorblechkörpers im Wickelkopf mittels Ösen elektrisch und mechanisch miteinander zu einer Wicklung verbunden sind, und einem Ventilator zur Erzeugung eines Kühlgasstroms durch die Maschine, wobei ein Teilstrom dieses Kühlgasstroms durch innerhalb der Hauptisolierung der Wicklungsstäbe gelegene Kühlkanäle geführt ist.

Die Erfindung geht dabei aus von einem Stand der Technik, wie er sich beispielsweise aus der EP-0 392 243 B1 ergibt.

### TECHNOLOGISCHER HINTERGRUND UND STAND DER TECHNIK

Bei elektrischen Maschinen mit indirekt gekühlter Statorwicklung werden die Stirnbügel im Wickelkopf durch einen Teilstrom des durch den Ventilator geförderten Kühlgasstromes gekühlt. Bei Grenzleistungsmaschinen sind die Stirnbügel durch zu hohe Erwärmung gefährdet. Während der in den Wicklungsnuten eingebettete Teil der Wicklung gezielt gekühlt wird, erwärmen sich diese freiliegenden Wicklungsteile nicht nur durch den Stromfluss sondern auch durch die magnetischen Felder im Wickelkopfraum.

Bei rotierenden elektrischen Maschinen mit direkt gekühlter Statorwicklung besteht die Wicklung aus massiven und hohlen Teilleitern, bei manchen Maschinentypen sogar nur aus Hohl leitern. Das durch die Hohlleiter durch die gesamte Länge der Statorstäbe strömende Kühlmittel bewirkt dabei auch eine ausreichende Kühlung der Stäbe im Wickelkopf. Die Kühlgaszufuhr erfolgt dabei normalerweise von einer Maschinenseite, die Abfuhr an der anderen Maschinenseite.

Bei luftgekühlten Maschinen und einseitiger Einspeisung ist die Kühlwirkung insbesondere bei grossen Maschinenlängen nicht mehr ausreichend. Um die Kühlwirkung zu steigern wird deshalb in der EP-0 392 243 B1 vorgeschlagen, die aus massiven Teilleitern aufgebauten Wicklungsstäbe mit seitlichen oder zwischen den beiden Teilleiterstapeln liegenden metallischen Kühlrohren/Kühlkanälen zu versehen. Sie sind gegeneinander und gegenüber den Teilleitern isoliert und liegen innerhalb der Hauptisolierung. Die Speisung erfolgt von beiden Maschinenseiten und von der Maschinenmitte aus. Die Zufuhr in Maschinenmitte erfolgt dabei durch radiale Kanäle im Statorblechkörper und Öffnungen in der Hauptisolierung. Das erwärmte Kühlgas verlässt die Kühlkanäle durch Öffnungen in der Hauptisolierung im Bereich der Endzonen des Statorblechkörpers durch radiale Kanäle im Statorblechkörper.

Die Ausrüstung von Statorwicklungsstäben mit zusätzlichen Kanälen und das Einbringen von derartigen Kanälen in den Stab vermindern den Nuffüllfaktor. Die zur Zu- und Abfuhr des Kühlgases dienenden Formstücke, die grösstenteils in die Hauptisolierung eingebettet sind, verteuern die Herstellung der Stäbe.

Aus der EP-0 519 091 B1 ist eine gasgekühlte elektrische Maschine bekannt, bei der nur die der elektrischen und mechanischen Verbindung dienenden metallischen Ösen eigens gekühlt werden. Dort sind die Ösen mit Kappen versehen, welche die Ösen unter Freilassung eines oder mehrerer annähernd axial verlaufender Kanäle praktisch vollständig umgeben. Diese Kanäle sind gegen den Statorblechkörper hin offen. Eine radial verlaufende Trennwand trennt den Wickelkopfraum vom Ansaugraum des Maschinenventilators. Die Kappen weisen an ihren trennwandseitigen Enden eine Öffnung auf, die mit den besagten Kanälen in freier Verbindung steht. Von dieser Öffnung führt eine flexible Leitung direkt in den Ansaugraum des Ventilators. Infolge der Druckdifferenz zwischen Ansaugraum und Wickelkopfraum strömt ein Teil des vom Ventilator geförderten Kühlmittels durch besagte Kanäle und kühlt die Ösen und in geringem Masse, auch die äussersten Stabenden. Als nachteilig könnte es angesehen werden, dass zur Kühlung der Ösen Kühlgas herangezogen wird, das bereits beim Umströmen der Stirnbügel im Wickelkopf aufgeheizt wurde, also eine eingeschränkte Kühlwirkung entfaltet. Eine Beaufschlagung mit frischem Kühlgas wäre nur dann zu verwirklichen, wenn im Wickelkopfraum besondere Leiteinrichtungen eingebaut würden.

### KURZE DARSTELLUNG DER ERFINDUNG

Der Erfindung liegt die Aufgabe zugrunde, eine elektrische Maschine der eingangs genannten Gattung zu schaffen, deren Statorwicklungsstäbe im Wickelkopfraum mit einfachen Mitteln ausreichend gekühlt werden können.

Diese Aufgabe wird erfindungsgemäss dadurch gelöst, dass die Statorwicklungsstäbe nur im Wickelkopf mit Kühlkanälen versehen sind, wobei jedem Stab mindestens ein an seiner einen Breitseite angeordnetes Paar von Kühlkanälen, nämlich ein erster und ein zweiter Kühl kanal, zugeordnet ist, welche Kühlkanäle bis zum Aktivteil des Statorblechkörpers getrennt verlaufen und erst dort untereinander verbunden sind, wobei die ersten Kühlkanäle mit einem vom Wickelkopfraum durch eine Trennwand getrennten Raum mittels Isolierrohren oder Isolierschläuchen verbunden sind und die zweiten Kühlkanäle an den Ösen mit dem Wickelkopfraum in Verbindung stehen.

Die Erfindung stellt sich im weitesten Sinne als Kombination der Kühlungsanordnungen nach der EP-0 392 243 B1 und der EP-0 519 091 B1 dar, vermeidet dabei jedoch die Mängel der bekannten Lösungen. Sie beruht insbesondere auf der Idee, die Kühlung im Aktivteil in herkömmlichen Sinne, also als indirekte Kühlung, zu realisieren, und die den Stirnfeldern ausgesetzten Stababschnitte im Wickelkopf und nicht nur die Ösen direkt zu kühlen. Damit wird der Nuffüllfaktor im Aktivteil nicht erniedrigt. Im Wickelkopf vereinfacht sich die Kühlgasführung durch die direkte Stabkühlung. Die zur Abstützung und Distanzierung der Stirnbügel notwendigen Abstütz- und Distanzierungsmittel können damit weitgehend ohne Rücksichtnahme auf die Kühlgasströmungsverhältnisse ausgelegt werden.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen Ausschnitt einer schematische Abwicklung des Statorwickelkopfes einer gasgekühlten elektrischen Maschine;
- Fig.2: einen Querschnitt durch Unter- und Oberstab gemäss Fig. 1 längs deren Linie AA kurz vor der Öse;
- Fig.3: einen Querschnitt einen Unterstab gemäss Fig.1 längs deren Linie BB kurz nach dem Austritt aus dem Aktivteil;
- Fig.4: einen Querschnitt durch die Öse gemäss Fig.1 längs deren Linie CC;
- Fig.5: einen Querschnitt durch die Isolierkappe der Öse gemäss Fig.1 längs deren Linie DD ausserhalb der Öse;
- Fig.6: einen Längsschnitt durch die Öse gemäss Fig.5 längs deren Linie EE;
- Fig.7: einen Längsschnitt durch eine alternative Ausführungsform einer Öse;
- Fig.8: einen Längsschnitt durch die Öse gemäss Fig.7 längs deren Linie FF;
- Fig.9: einen Querschnitt durch die Verbindungselemente zwischen Druckraum und Ösen gemäss Fig.8 längs deren Linie GG.

### WEGE ZUR AUSFÜHRUNG DER ERFINDUNG

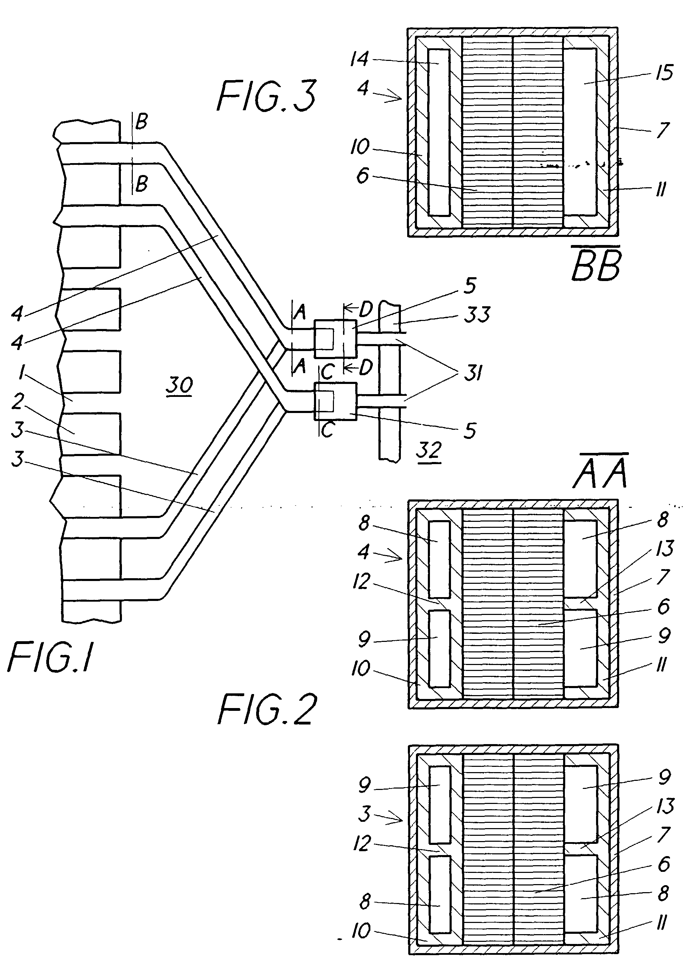

In der Zeichnung ist in Fig. 1 ein stark vereinfachter Ausschnitt einer schematische Abwicklung des Statorwickelkopfes einer gasgekühlten elektrischen Maschine dargestellt. In jeder Statornut 1 des Statorblechkörpers 2 liegen jeweils ein Unterstab 3 und ein Oberstab 4 übereinander. Aus Gründen einer übersichtlicheren Darstellung sind in Fig.1 nur zwei Unterstäbe und zwei Oberstäbe eingezeichnet. In üblicher Weise sind jeweils ein Unterstab 3 und ein Oberstab 4 aus verschiedenen Nuten 1 kommend mittels elektrisch isolierter Ösen 5 elektrisch und mechanisch mit einander verbunden und auf diese Weise zu einer Wicklung zusammengeschaltet. Die Gesamtheit aller aus dem Statorblechkörper 2 austretenden Unter- und Oberstäbe samt den Ösen 5 bildet den Statorwickelkopf. Unter- und Oberstäbe bestehen aus einer Vielzahl elektrisch gegeneinander isolierter Teilleiter 6, die verteilt auf zwei nebeneinanderliegende Teilleiterstapel von einer gemeinsamen Hauptisolierung 7 umgeben sind, die bis an die Öse 5 heranreicht (vgl. Fig.2 und 3). Insoweit sind elektrische Maschinen bekannt.

Zur Kühlung des Statorwickelkopfes ist nun erfindungsgemäss vorgesehen, an den Breitseiten jedes Stabes 3, 4 ein Paar Kühlkanäle, einen ersten Kühlkanal 8 und einen zweiten Kühlkanal 9, die innerhalb der Hauptisolierung 7 liegen. Vorzugsweise sind dabei auf jeder Breitseite der Stäbe derartige Kühlkanäle angeordnet. Wie aus Fig.2 ersichtlich ist, können diese als geschlossene Kanäle aus Doppelrohr 10 ausgebildet sein (linke Hälfte von Fig.2). Sie können aber auch aus E-Profilen 11, die gegen die Teilleiter 6 hin offen sind, bestehen wobei das eine Teilleiterbündel die innere Kanalwand bildet.

Die Kühlkanäle 8, 9 enden kurz vor dem Eintritt der Stäbe 3, 4 in den Aktivteil (Statorblechkörper 2) und sind dort miteinander verbunden, was durch Entfernen des die beiden Kanäle trennenden Steges 12 bzw. 13 erfolgt. Der Verbindungsraum ist in Fig.3 mit 14 bzw. 15 bezeichnet. Am ösenseitigen Ende der Stäbe 3, 4 ist hingegen keine derartige Verbindung zwischen ersten 8 und zweiten Kühl kanal 9 vorgesehen.

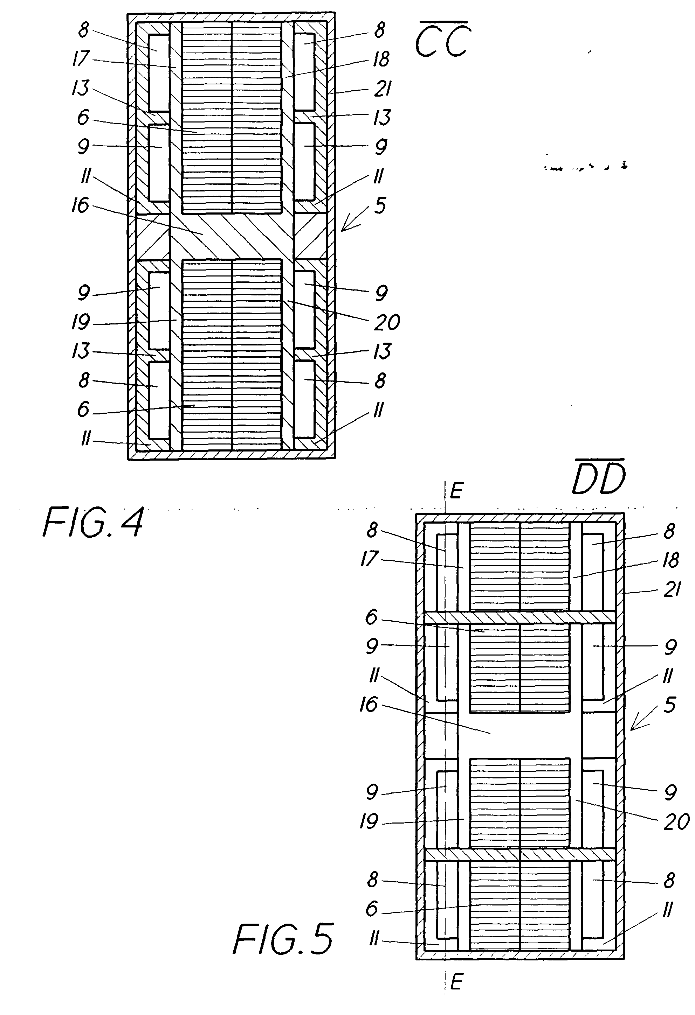

In den Fig.4, 5 und 6 ist der Aufbau der isolierten Ösen 5 anhand von zwei Querschnitten und einem Längsschnitt verdeutlicht. Die Öse umfasst ein H-förmiges metallisches Verbindungsstück 16, welches die beiden Teilleiterbündel aufnimmt. Dort sind die Teilleiter 6 unter sich und mit den beiden Schenkelpaaren 17, 18 bzw. 19, 20 durch Lötung elektrisch und mechanisch verbunden. Das Verbindungsstück 16 ist von einer Isolierkappe 21 umgeben, deren axiale Stirnwand 22 vom Verbindungsstück 16 axial distanziert ist. Der so geschaffene Raum ist durch zwei Trennwände 23, 24 in drei Kammern 25, 26 und 27 unterteilt. Die Trennwände 23, 24 liegen in der (axialen) Verlängerung der Stege 13. Die obere Kammer 25 und die untere Kammer 27 weisen jeweils eine oder mehrere Auslassöffnungen 28 bzw. 29 auf. Auf diese Weise stehen die Kühlkanäle 8 in freier Verbindung mit dem Wickelkopfraum 30.

In die mittlere Kammer 26 münden die vier Kühlkanäle 9. Ein axial verlaufendes Isolierrohr 31 verbindet die Kammer 26 unter Umgehung des Wickelkopfraums 30 mit einem Druckraum 32, z.B. dem Ausströmraum des (nicht gezeichneten) Maschinenventilators, der vom Wickelkopfraum 30 durch eine radial verlaufende Trennwand 33 separiert ist. Das Isolierrohr 31 ist dabei nur in der Trennwand 33 befestigt, z.B. mit dieser verklebt. In die Kammer 26 hingegen ragt das Isolierrohr 31 dagegen formschlüssig hinein, ist jedoch nicht fest mit der Strinwand 22 der Isolierkappe 21 verbunden. Auf diese Weise sind betriebsbedingte Relativbewegungen in axialer und auch in Grenzen radialer Richtung zwischen der Öse 5 und der Trennwand 33 möglich, wobei zu berücksichtigen ist, dass die Länge des Isolierrohres 31 bei einer realen Ausführung länger ist als es in der Zeichnung dargestellt ist. Anstelle von Isolierrohren 31 können hier auch flexible Isolierschläuche verwendet werden, wie sie bei wassergekühlten Statorwicklungen verwendet werden. Des weiteren ist ebenfalls eine feste Verbindung zwischen einem Isolierrohr 31 und einer Isolierkappe 21 denkbar, wobei dann allerdings das Isolierrohr 31 in der Trennwand 33 lediglich geführt gehalten wird, um die oben bereits erwähnten Relativbewegungen zu ermöglichen.

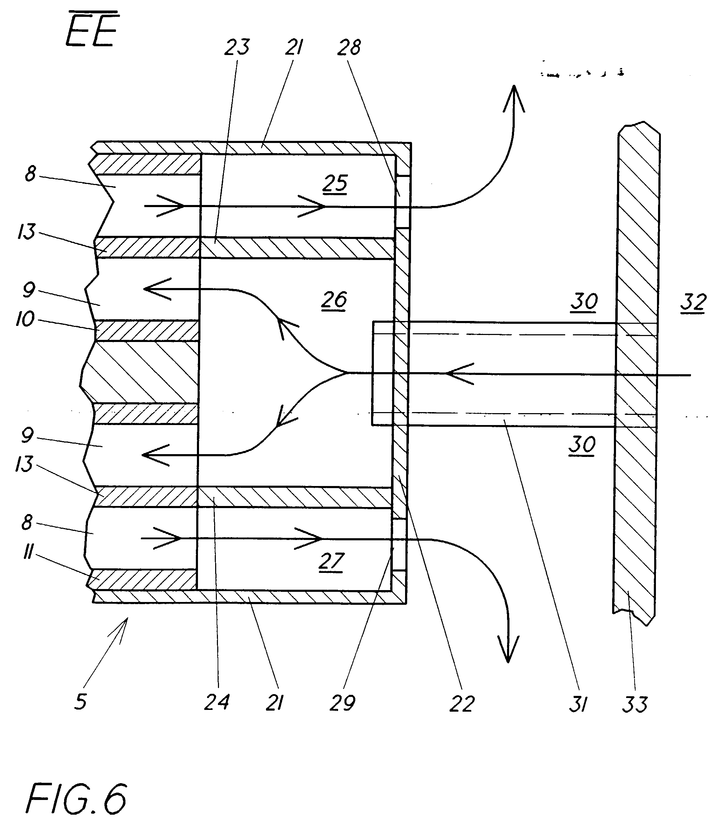

Aufgrund der Druckdifferenz in Ausströmraum 32 und Wickelkopfraum 30 strömt ein Teilstrom des vom Maschinenventilator geförderten Kühlgases, in Fig.6 durch Pfeile symbolisiert, durch das Rohr 31 in die Kammer 26, dann durch die Kühlkanäle 9 an den Teilleitern 6 entlang bis in die Verbindungsräume 14, 15 kurz vor dem Aktivteil 2, dann durch die Kühlkanäle 8 zurück zur Öse 5 und verlässt diese durch die Auslassöffnungen 28 bzw. 29, um in den Wickelkopfraum 30 zu gelangen (Saugkühlung).

Es ist auch der umgekehrte Strömungsverlauf möglich, wenn wie bei der Maschine nach EP-0 519 091 B1 der Ausströmraum des Ventilators der Wickelkopfraum ist (Druckkühlung). Bei einer derartigen Konfiguration strömt das Kühlgas gegen die in Fig.6 eingezeichnete Richtung der Pfeile im umgekehrter Reihenfolge vom Wickelkopfraum 30 in den Ansaugraum 32 des Maschinenventilators.

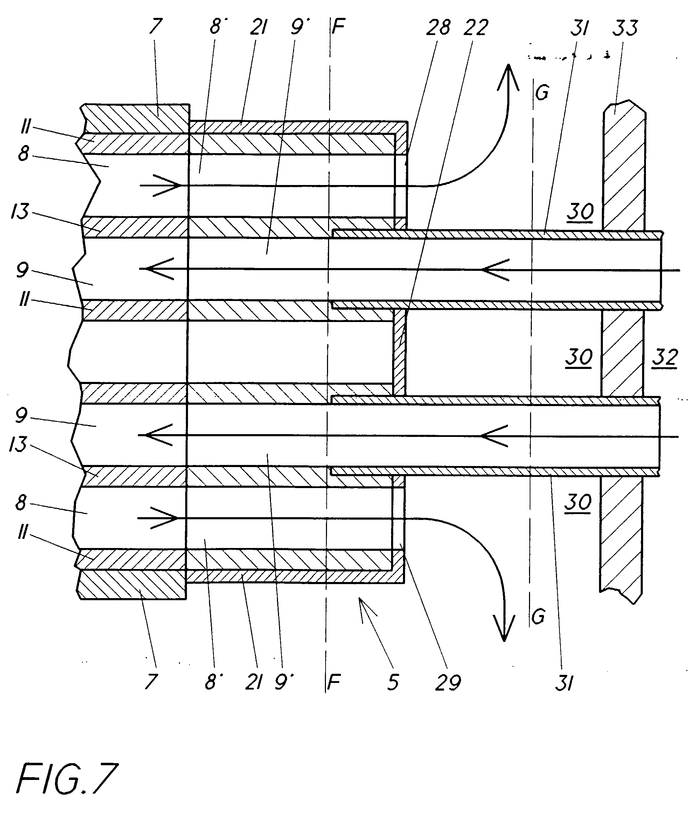

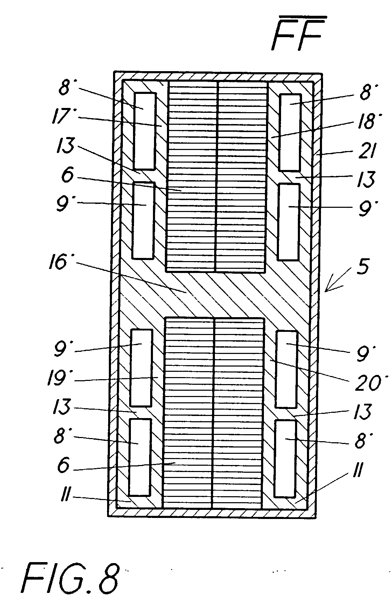

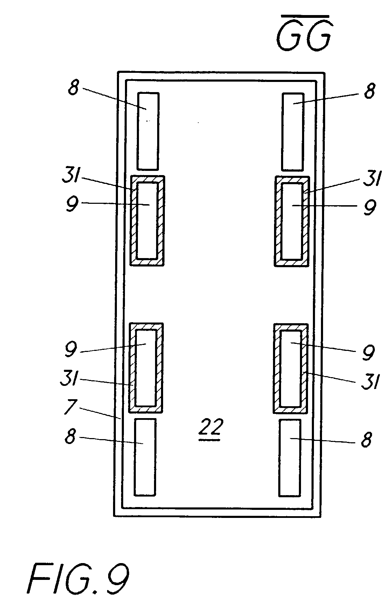

Eine alternative Ausführungsform der Erfindung ist in den Fig.7, 8 und 9 dargestellt. Sie unterscheidet sich von der bisher beschriebenen im wesentlichen nur in der Ausführung der Öse. Diese umfasst ein H-förmiges Verbindungsstück 16' mit verdickten Schenkeln 17', 18', 19', 20'. In diesen sind im Beispielsfall insgesamt acht seitliche, axial verlaufende Durchbrüche 8', 9' vorgesehen, die in etwa mit den Kühlkanälen 8 bzw. 9 fluchten. Die Stirnwand 22 der Isolierkappe 21 liegt an der axialen Stirnwand des Verbindungsstücks 16' an. Die Isolierrohre 31 sind in Erweiterungen der Durchbrüche 9' gesteckt ohne mit diesen fest verbunden zu sein. Sie durchsetzen die Trennwand 33 und sind darin z.B. verklebt. Auch hier können an die Stelle der Isolierrohre Isolierschläuche treten.

### BEZEICHNUNGSLISTE

- 1: Nuten in 2
- 2: Statorblechkörper
- 3: Unterstäbe
- 4: Oberstäbe
- 5: Ösen
- 6: Teilleiter
- 7: Hauptisolierung
- 8,9: Kühlkanäle
- 10: Doppelrohre
- 11: E-Profile
- 12,13: Stege in 10 bzw. 11
- 14,15: Verbindungsräume
- 16, 16': H-förmiges Verbindungsstück
- 17-20, 17'-20': Schenkel von 16, 16'
- 21: Isolierkappe
- 22: Stirnwand von 21
- 23,24: Trennwände in 21
- 25,26,27: Kammern in 21
- 28,29: Auslassöffnungen in 22
- 30: Wickelkopfraum
- 31: Isolierrohr oder Isolierschlauch
- 32: Ausströmraum des Maschinenventilators
- 31: Trennwand zwischen 30 und 32

## Patentansprüche

1. Gasgekühlte elektrische Maschine mit einer in Nuten (1) des Statorblechkörpers (2) angeordneten Statorwicklung, im wesentlichen bestehend aus jeweils zwei in einer Nut übereinanderliegenden, aus gegeneinander isolierten Teilleitern (6) aufgebauten Statorwicklungsstäben (3,4), die ausserhalb des Statorblechkörpers im Wickelkopf mittels Ösen (5) elektrisch und mechanisch miteinander zu einer Wicklung verbunden sind, und einem Ventilator zur Erzeugung eines Kühlgasstroms durch die Maschine, wobei ein Teilstrom dieses Kühlgasstroms durch innerhalb der Hauptisolierung (7) der Wicklungsstäbe gelegene Kühlkanäle (8,9) geführt ist, dadurch gekennzeichnet, dass die Statorwicklungsstäbe (3,4) nur im Wickelkopf mit Kühlkanälen (8,9) versehen sind, wobei jedem Stab mindestens ein an seiner einen Breitseite angeordnetes Paar von Kühlkanälen, nämlich ein erster (8) und ein zweiter Kühlkanal (9), zugeordnet ist, welche Kühlkanäle bis zum Aktivteil des Statorblechkörpers (2) getrennt verlaufen und erst dort untereinander verbunden sind, wobei die ersten Kühlkanäle (8) mit einem vom Wickelkopfraum (30) durch eine Trennwand (33) getrennten Raum (32) mittels Isolierrohren (31) oder Isolierschläuchen verbunden sind und die zweiten Kühlkanäle (9) an den Ösen (5) mit dem Wickelkopfraum (5) in Verbindung stehen.

2. Elektrische Maschine nach Anspruch 1, dadurch gekennzeichnet, dass an den Stabenden metallische Verbindungsstücke (16;16') vorgesehen sind, die von einer Isolierkappe (21) umgeben sind, wobei die ersten Kühlkanäle (8) durch Auslassöffnungen (28,29) in der Stirnseite (22) der Isolierkappen (21) in den Wickelkopfraum (30) münden, während die zweiten Kühlkanäle (9) in ein oder mehrere Isolierrohre (31) oder Isolierschläuche münden.

3. Elektrische Maschine nach Anspruch 2, dadurch gekennzeichnet, dass die Stirnwand (22) der Isolierkappe (21) vom Verbindungsstück (16) beabstandet ist und der auf diese Weise gebildete Raum durch axial verlaufende Trennwände (23,24) in drei Kammern (25,26,27) unterteilt ist von denen die radial innenliegende Kammer (27) und die radial aussenliegende Kammer (25) mit Durchbrüchen (28,29) versehen ist, derart, dass diese Kammern mit dem Wickelkopfraum (30) in freier Verbindung stehen, während die mittlere Kammer (26) in freier Verbindung mit den zweiten Kühlkanälen (9) steht.

4. Elektrische Maschine nach Anspruch 2, dadurch gekennzeichnet, dass das Verbindungsstück mit seitlichen Durchbrüchen (8',9') versehen ist, welche die Fortsetzung der ersten und zweiten Kühlkanäle (8,9) bilden, und die einen Durchbrüche (8') über Auslassöffnungen (28,29) in der Stirnwand (22) der Isolierkappe (21) mit dem Wickelkopfraum. (30) in freier Verbindung stehen, und die anderen Durchbrüche (9') über Isolierrohre (31) oder Isolierschläuche mit dem besagten Raum (32) verbunden sind.
